# EUROPÄISCHE PATENTSCHRIFT

(11) **EP 3 645 919 B1**
(45) Veröffentlichungstag und Bekanntmachung des Hinweises auf die Patenterteilung: **16.02.2022**
(21) Anmeldenummer: 18737507.6
(22) Anmeldetag: 22.06.2018
(51) Int. Cl.: F16H 61/24, F16H 59/08, F16H 59/10, F16H 59/04

(54) **VORRICHTUNG UND VERFAHREN ZUM ANWÄHLEN VON FAHRSTUFEN BEI KRAFTFAHRZEUGEN**
DEVICE AND METHOD FOR SELECTING GEARS IN MOTOR VEHICLES
DISPOSITIF ET PROCÉDÉ DE SÉLECTION DE RAPPORTS DANS DES VÉHICULES À MOTEUR

(30) Priorität: 29.06.2017 DE 102017114591
(43) Veröffentlichungstag der Anmeldung: 06.05.2020
(73) Patentinhaber: Küster Holding GmbH, 35630 Ehringshausen (DE)
(72) Erfinder: LOTZ, Andreas, 35614 Asslar-Berghausen (DE); SCHMIDT, Thomas, 35630 Ehringshausen (DE)
(74) Vertreter: Müller, Eckhard
(86) Internationale Anmeldenummer: PCT/EP2018/066758
(87) Internationale Veröffentlichungsnummer: WO 2019/002126

(56) Entgegenhaltungen:
- EP-A2- 2 028 394
- DE-A1- 10 243 286
- US-A- 6 072 390
- US-A1- 2003 188 594
- US-A1- 2009 038 426
- US-A1- 2014 236 436
- US-A1- 2015 362 068
- US-A1- 2016 017 983

## Beschreibung

Die Erfindung betrifft eine Vorrichtung nach dem Oberbegriff des Anspruchs 1, wie offenbart in dem Dokument US 2015/362068 A1, und ein mit dieser Vorrichtung in Zusammenhang stehendes Verfahren zum Anwählen von Fahrstufen für ein Getriebe bei einem Kraftfahrzeug.

Bis vor einigen Jahren war es üblich, dass bei Fahrzeugen mit Automatikgetrieben sowohl die gewünschte Getriebefahrstufe als auch das Einlegen der Parksperre manuell, beispielsweise über Seilzüge, von der Schaltbetätigung zum Getriebe übertragen wurde.

Der Trend zu shift-by-wire-Systemen hat in den aktuellen Fahrzeuggenerationen bereits Einzug gehalten. Hierbei wird der Fahrerwunsch zum Einlegen der Fahrstufen bzw. der Parksperre nur noch auf elektronischem Weg an Aktuatoren im oder am Getriebe weitergegeben. Diese empfangen die Signale und übernehmen die Schaltarbeit.

Weiterführende Konzepte der Schaltvorrichtung sollen dem sogenannten Fahrerarbeitsplatz zukünftig noch weitere Möglichkeiten zur Individualisierung bieten können.

Aus der DE 10 2009 000 640 A1 ist eine Betätigungseinrichtung für ein shift-by-wire-betätigtes Gangwechselgetriebe bekannt. Die Betätigungseinrichtung weist einen Schaltsockel sowie einen in einer Lagerstelle des Schaltsockels schwenkbar gelagerten Wählhebel auf. Ein Aktuator ist zur Blockierung des Wählhebels vorgesehen. Zusätzlich zur Blockierfunktion ist der Aktuator zur Erzeugung mechanischer Vibrationen oder Schwingungen ausgelegt.

Aus der EP 2 318 736 B1 ist eine Betätigungseinrichtung für ein Gangwechselgetriebe mit einem Betätigungshebel und mit einem Positionssensor zur Ermittlung der Position des Betätigungshebels bekannt. Ferner weist die Betätigungseinrichtung eine Haptikemulation zur realistischen Emulation der am Betätigungshebel wirkenden Gegenkräfte auf. Hierzu ist ein mit dem Betätigungshebel verbundener, steuerbar verstellbarer elektrorheologisch oder magnetorheologisch verstellbarer Dämpfer sowie ein Aktuator vorgesehen.

Aus der EP 1 490 610 B1 und der US 2003/188594 A1 ist eine haptische Schaltvorrichtung mit einem Wählhebel bekannt, wobei der Wählhebel innerhalb eines Begrenzungen aufweisenden Musters beweglich ist und von außerhalb der Musterbegrenzungen liegenden Bereichen abgesperrt ist. Ferner ist wenigstens ein Sensor zum Erfassen einer Position des Wählhebels und zum Ausgeben dieser Position vorgesehen. Ein Aktuator gibt eine Kraft an den Wählhebel aus.

Aus der US 2016/0017983 A1 ist eine Gangschaltung mit einer Schalteinrichtung zum Schalten zwischen verschiedenen Gängen eines Getriebes eines Kraftfahrzeugs bekannt. Die Schalteinrichtung kommuniziert elektrisch mit einem Aktuator, der seinerseits eine Änderung des ausgewählten Getriebegangs in einem sogenannten Shift-by-Wire-System bewirkt. Die Schalteinrichtung kann einen Drehwähler enthalten, wie beispielsweise eine Wählscheibe oder einen Drehknopf, der von einem Benutzer manuell in mehrere Positionen gedreht werden kann, die unterschiedlichen Gängen des Fahrzeuggetriebes entsprechen.

Aus der DE 102 43 286 A1 sind eine Schaltkonsole für ein automatisches KFZ-Getriebe und ein Verfahren zur Steuerung eines Bedienhebels der Schaltkonsole bekannt. Der Hebel soll schwenkbar gelagert sein und seine Bewegungen und Positionen sollen über Sensoren an ein Getriebesteuergerät übertragen werden. Dabei werden sowohl Widerstandskräfte als auch ein aktives Verschwenken durch einen Elektromotor erzeugt.

Aus der US 2015/362068 A1 sind eine Vorrichtung und ein Verfahren zur Ansteuerung eines Schalthebels mit einer Steuereinheit bekannt, die einen Verfahrweg des Schalthebels für den Fall, dass der Schalthebel in eine vorbestimmte Schaltstufe betätigt wird, derart einstellt, dass er sich von einem Referenzverfahrweg des Schalthebels unterscheidet, der ein Verfahrweg des Schalthebels ist, wenn der Schalthebel in eine andere Schaltstufen als die vorbestimmte Schaltstufe betätigt wird.

In der US 4,949,119 ist eine Vorrichtung sowie eine Methode zur Simulation von Fahrstufenwechseln in einem Fahrzeug mit einem Wählhebel sowie Positionssensoren beschrieben.

In der DE 10 2005 060 933 B3 ist ein Wählhebel für ein Kraftfahrzeug beschrieben, der über eine erste und eine zweite Achse in einem Gehäuse gelagert ist, die, räumlich voneinander getrennt sind, senkrecht zueinander verlaufen und jeweils in Achsrichtung verschiebbar sind. Dadurch ist die Schaltbewegung des Wählhebels in zwei senkrecht zueinander verlaufenden translatorische Bewegungen umgesetzt.

Aus der DE 10 2005 001 589 B3 ist eine Schaltvorrichtung für ein Fahrzeuggetriebe mit einem innerhalb eines Schaltvorrichtungsgehäuses um mindestens eine Drehachse schwenkbaren Wählhebel zur Wahl von Fahrstufen bekannt. Am unteren freien Ende des Wählhebels ist dieser an ein Sperrelement einer Verriegelungsvorrichtung angeordnet. Eine Verriegelung sei immer dann notwendig, wenn eine Veränderung der Stellung des Wählhebels nicht mit sonstigen Rahmendaten des Zustandes von Kraftfahrzeugkomponenten, wie Pedalerie und Motordrehzahl, vereinbar ist.

Aus der DE 198 48 191 A1 ist ein Schaltgetriebe mit Stellelement zum Wechseln der Übersetzung und ein manuell betätigbares Bedienelement bekannt, mittels welchem das Stellelement in unterschiedlichen Gängen zugeordnete Stellungen überführbar ist. Zum Nachempfinden eines konventionellen Schaltgetriebes ist eine Dämpferanordnung mit mindestens einer an das Bedienelement ankoppelnden Dämpfungseinrichtung vorgesehen, mittels derer der Bedienwiderstand des Bedienelementes einstellbar ist. Jeder Dämpfungseinrichtung ist eine parallel geschaltete Rückstelleinrichtung zugeordnet, mittels derer Rückstellkräfte auf das Bedienelement ausübbar sind.

Aus der US 2006/0012584 A1, WO 2013/123375 A2, WO 2015/088630 A1 und DE 10 2006 007 600 B4 ist jeweils ein Drehsteller für elektrische oder elektronische Geräte in einem Kraftfahrzeug bekannt, welcher ein gegenüber feststehenden Gehäuseteilen drehbewegliches Stellelement aufweist. Mit derartigen Drehstellern können beispielsweise die Lautstärke, die Klimaanalage, die Heizung sowie Spiegel und/oder Sitz- oder Dachfenster oder die Navigation, der Fahrzeugstatus oder Internetseiten gesteuert werden.

Aus der DE 10 2006 028 228 A1 geht ein Stellglied als Betätigungsorgan für einen elektrischen Schalter mit einer bewegbaren Handhabe und mit einem Verschwenkmittel hervor. Ein solcher elektrischer Schalter soll als Gangwahlschalter für ein Kraftfahrzeug eingesetzt werden. Dabei kann das Stellglied in einem elektrischen und/oder elektronischen Schalter nach Art eines Joystick- oder Cursor-Schalters angeordnet sein.

Aus der EP 2 737 380 B1 ist eine Bedienvorrichtung mit einer Handhabe bekannt, die aus einer Ruheposition relativ zu einer Achse manuell auslenkbar ist. Ferner ist eine Sensorik zur Erfassung der Auslenkung der Handhabe und eine Haptikeinrichtung vorgesehen, durch die in Abhängigkeit von der Auslenkung der Handhabe diese von einem haptischen Feedback beaufschlagt ist. Die Handhabe ist mit einem Aktuator fest verbunden, durch den sie in Abhängigkeit von Ihrer Auslenkung um einen Bewegungsweg alternierend bewegbar angetrieben ist.

In der US 8,347,748 B2 ist eine Gangwahlvorrichtung mit einem Wählhebel beschreiben. Sensoren dienen zum Messen der Bewegung des Wählhebels.

Ferner weist die Vorrichtung Elektromotoren auf, welche mit dem Wählhebel verbunden sind.

Insgesamt haben die Vorrichtungen aus dem Stand der Technik den Nachteil, dass ihr Aufbau sehr aufwändig ist und eine Vielzahl von Komponenten erforderlich ist, um die einzelnen Teilfunktionen zu verwirklichen. Andererseits sind die einfach aufgebauten Vorrichtungen in ihrem Funktionsumfang beschränkt.

Ausgehend von den zuvor beschriebenen Nachteilen liegt der Erfindung die Aufgabe zugrunde, eine verbesserte Vorrichtung zum Anwählen von Fahrstufen anzugeben, die gegenüber dem Stand der Technik einfacher aufgebaut und mit geringerem Aufwand ansteuerbar ist.

Diese Aufgabe wird gelöst mit einer Vorrichtung zum Anwählen von Fahrstufen für ein Getriebe bei einem Kraftfahrzeug nach Anspruch 1 mit einem die jeweilige Fahrstufe auswählenden Bedienelement, welches bezüglich wenigstens einer Drehachse manuell schwenk- oder drehbar ausgebildet ist, wobei mittels eines auf das Bedienelement wirkenden Aktuators ein haptisches Feedback auf einen Benutzer erzeugbar ist, wobei eine, in Abhängigkeit der Position des Bedienelementes, den Aktuator betätigende und

Fahrstufensteuersignale erzeugende Steuerung vorgesehen ist. Die Erfindung zeichnet sich dadurch aus, dass das Bedienelement neben der manuellen Betätigung durch den Benutzer auch für eine selbsttätige Schaltbewegung durch den von der Steuerung betätigten Aktuator ausgebildet ist.

Bei einem Aktuator handelt es sich im Rahmen der vorliegenden Erfindung um ein Antriebselement, welches ein Steuersignal in eine mechanische Bewegung umsetzen kann oder als Bremse wirken kann.

Die erfindungsgemäße Vorrichtung hat den Vorteil, dass auch bei einem nicht durch den Benutzer ausgelösten Fahrstufenwechsel, beispielsweise beim autonomen Fahrbetrieb, bei einem Automatikbetrieb des Getriebes, bei einer automatisierten Einlegung der Parksperre oder bei einem Schaltwippeneingriff, die für den Benutzer sichtbare und/oder tastbare Position des Bedienelementes der aktuell eingelegten Fahrstufe entspricht. Die Steuerung der Vorrichtung erhält dabei von einer weiteren Steuereinrichtung des Fahrzeugs ein Signal, welches die Information über die aktuell eingelegte Fahrstufe enthält, beispielsweise von dem Getriebesteuergerät oder dem für das autonome Fahren, die Schaltwippen oder die Parksperre zuständigen Steuergerät. Die Steuerung gleicht die Information über die aktuell eingelegte Fahrstufe mit der aktuell vorliegenden Position des Bedienelementes ab. Bei einer Abweichung zwischen der vorgegebenen Fahrstufe und der Position des Bedienelementes, betätigt die Steuerung den Aktuator, um das Bedienelement in die vorgegebene Fahrstufe, im Weiteren als Schaltstellung bezeichnet, zu überführen.

Unter einer selbsttätigen Schaltbewegung wird im Rahmen der Erfindung auch eine Rückführung des Bedienelementes aus einer von dem Benutzer neu angewählten Schaltstellung in die der aktuellen Fahrstufe entsprechende Schaltstellung verstanden, wenn eine Umschaltung in die der durch den Benutzer angewählten Schaltstellung entsprechenden Fahrstufe nicht erfolgt ist. Wenn der Benutzer beispielsweise bei einer simulierten H-Schaltung das Bedienelement aus der Schaltstellung für die Fahrstufe "Vorwärtsgang 3" in die Schaltstellung für die Fahrstufe "Vorwärtsgang 2" führt, obwohl ein derartiger Fahrstufenwechsel aufgrund einer drohenden Überdrehzahl nicht erfolgt, kann die Steuerung die Aktuatoren ansteuern, dass das Bedienelement für die Dauer des manuellen Benutzereingriffs ein haptisches Feedback ausgibt. Sobald der Benutzer das Bedienelement durch Loslassen freigibt, wird dieses aufgrund der dann selbsttätig ausgeführten Schaltbewegung aktiv und gerichtet in die der aktuellen Fahrstufe entsprechenden Schaltstellung, im vorliegenden Beispiel die Schaltstellung "Vorwärtsgang 2" zurückgeführt.

Bei einem monostabilen Schaltschema, beispielsweise mit einem monostabilen Wählhebel als Bedienelement, kehrt das Bedienelement nach einer durch den Benutzer erfolgten, manuellen Auslenkung selbsttätig in die stabile Ruhestellung zurück, wenn die Haptik eines herkömmlichen monostabilen Schaltschemas und die dabei an dem Bedienelement angreifenden Rückstellkräfte durch die Aktuatoren nachgebildet werden. Eine selbsttätige Schaltbewegung bei einem monostabilen Schaltschema erfolgt dann, wenn in dem Kraftfahrzeug oder in dessen Getriebe einen Fahrstufenwechsel ohne einen Benutzereingriff an dem Bedienelement der Vorrichtung erfolgt und das monostabile Bedienelement eine selbsttätige Bewegung aus dessen Ruhelage heraus durchläuft, um den erfolgenden Fahrstufenwechsel zu signalisieren.

Gemäß einer vorteilhaften Ausgestaltung können den unterschiedlichen Fahrstufen unterschiedliche Schaltschwellen des Bedienelementes für ein Umschalten in eine andere Fahrstufe zugeordnet sein.

Auf diese Weise wird sichergestellt, dass bei einem manuellen Fahrstufenwechsel durch den Benutzer die Umschaltung in eine andere Fahrstufe zuverlässig erfolgt. Eine Umschaltung von einer ersten in eine zweite Fahrstufe erfolgt somit an einer anderen Position des Bedienelementes als eine Umschaltung von der zweiten Fahrstufe in die erste. Somit liegt stets ein bestimmter Zustand vor und ein so genanntes Einschwingen zwischen zwei auswählbaren Fahrstufen wird vermieden, wenn sich das Bedienelement am Übergang zwischen zwei benachbarten, unterschiedlichen Fahrstufen zugeordneten, Positionen befindet.

Bei der Erfindung handelt es sich beispielsweise um ein in X- und/oder Y-Richtung bewegliches Bedienelement, beispielsweise nach Art eines Drehknopfes oder Joysticks, dessen Kraftrückmeldung frei programmierbar ist. Das Drehmoment oder die Kraft des Bedienelementes wird von mindestens einem Aktuator aufgebracht. Anders als bei den derzeitigen, mechanischen Konzepten, bei denen die Kraft-Kennlinien immer der vorgegebenen Rastierung folgt, ermöglicht dieses System eine Anpassung der Schaltwege und -kräfte nach individuellen Wünschen der Hersteller oder des Fahrers. So lässt sich mit dem gleichen System ein monostabiler Wählbebel, eine rastierte Schaltung oder sogar eine manuelle H-Schaltung durch Änderung der Parameter darstellen. Auch die oft kostspielige Umsetzung von Rechtslenkervarianten ist bei diesem System einfach zu realisieren.

Dementsprechend gestattet die grundlegende Idee beispielsweise einen universellen Wählhebel für verschiedene Bedienkonzepte - ob fahrzeug- oder kundenspezifisch - vorzusehen.

Neben den erwähnten Vorteilen bieten sich mit der erfindungsgemäßen Vorrichtung auch neue Funktionen an, beispielsweise können Rastierkräfte abhängig von der Bedingung verändert oder bei unerlaubten Schaltzuständen der Fahrer mittels Feedback alarmiert werden. Im Weiteren kann das Bedienelement beim autonomen Fahren der Gangstellung automatisiert nachgeführt werden.

In einer Weiterbildung der Erfindung kann vorgesehen sein, dass den unterschiedlichen Fahrstufen unterschiedliche Schaltstellungen des Bedienelementes zugeordnet sind, wobei die Schaltschwellen benachbarter Schaltstellungen beabstandet zueinander sind. Auf diese Weise wird erreicht, dass das Bedienelement bis zu einer vorbestimmten Grenze aus der Schaltstellung herausbewegt werden kann, ohne, dass es zu einer Umschaltung der Fahrstufen kommt. Dies ist insbesondere dann von Vorteil, wenn der Benutzer beispielsweise eine ungenaue oder unbeabsichtigte Eingabe an dem Bedienelement vornimmt, mit der er einen Fahrstufenwechsel nicht beabsichtigt.

In einer Weiterbildung der Erfindung kann alternativ vorgesehen sein, dass die Schaltschwellen einen sich um die jeweilige Schaltstellung einer Fahrstufe erstreckenden Fahrstufenbereich definieren, innerhalb dessen das Bedienelement ohne Auslösung eines Fahrstufensteuersignals bewegbar ist und sich die Fahrstufenbereiche benachbarter Schaltstellungen vorzugsweise überlappen. Durch eine solche Ausgestaltung können einerseits kurze Schaltwege zwischen den einzelnen Schaltstellungen bei gleichzeitig großen Fahrstufenbereichen ermöglicht werden. Somit wird eine sowohl fehlerarme als auch komfortable Bedienung möglich.

Erfindungsgemäß ist wenigstens ein Positionsaufnehmer zur Bestimmung der Schwenk- oder Drehposition des Bedienelementes bezogen auf die wenigstens eine Drehachse und zur Erzeugung eines entsprechenden Positionssignals vorgesehen. Der Positionsaufnehmer detektiert entweder dauerhaft, in vorgegebenen zeitlichen Abständen oder bei separater Aktivierung die Position des Bedienelementes, um diese an die Steuerung der Vorrichtung zurückzumelden. Dazu erzeugt der Positionsaufnehmer ein analoges oder digitales Positionssignal, welches im Weiteren von der mit dem Positionsaufnehmer verbundenen Steuerung verarbeitet wird. Bei Ausführungen der Vorrichtung mit mehreren Drehachsen kann der Positionsaufnehmer entweder die Schwenk- oder Drehposition des Bedienelementes bezogen auf die wenigstens eine Drehposition des Bedienelementes ermitteln. Denkbar ist auch, dass der Positionsaufnehmer zusätzlich die Position bezüglich einer zweiten Drehachse detektiert und an die Steuerung übermittelt.

In einer Variante der Erfindung kann der Positionsaufnehmer direkt an oder auf der Drehachse angeordnet sein. Im Rahmen der vorliegenden Erfindung kann unter dem Begriff "Drehachse" ein Achsbauteil oder eine Welle verstanden werden, die zur dreh- bzw. schwenkbaren Lagerung des Bedienelementes an der Vorrichtung ausgebildet ist. Eine Drehachse kann jedoch auch eine virtuelle Achse sein, um die das Bedienelement mittels einer Lagerung dreh- oder schwenkbar geführt ist. Durch eine Anordnung des Positionsaufnehmers direkt an oder auf der Drehachse kann die Position des Bedienelementes besonders genau bestimmt werden.

Alternativ dazu kann der Positionsaufnehmer an dem Aktuator angeordnet sein, um die von diesem erzeugte Bewegung auszuwerten und darauf basierend auf die Position des Bedienelementes rückzuschließen. Zur Anpassung der Genauigkeit der Messung an dem Aktuator kann ein zusätzliches Getriebe an dem Aktuator vorgesehen sein, welches die unmittelbar durch den Aktuator erzeugte Bewegung über- oder untersetzt. Beispielsweise kann eine rotatorische Bewegung des Aktuators zur Erhöhung der Messauflösung übersetzt werden, so dass eine durch den Aktuator erzeugte Umdrehung für die Zwecke der Positionsmessung vervielfacht wird. Dies bietet sich insbesondere für relative Messverfahren an, bei welchen die Messaufnehmer in ihrem Drehwinkel nicht beschränkt sind. Eine Untersetzung der durch den Aktuator erzeugten Bewegung bietet sich an, wenn ein absolutes Messverfahren angewendet wird, bei welchem der Messaufnehmer nur über einen begrenzten Winkel oder eine begrenzte Strecke verfahrbar ist.

Erfindungsgemäß ist die Steuerung sowohl zur Ermittlung einer Schaltstellung des Bedienelementes als auch zur Erzeugung eines Kontrollsignals für eine Bewegung und das haptische Feedback des Bedienelementes unter Einbeziehung des Positionssignals des Positionsaufnehmers ausgebildet. Die Schaltstellung ist eine Position des Bedienelementes, die nach dem aktuell verwendeten Schaltschema einer bestimmten Fahrstufe bzw. einem bestimmten Fahrstufenwechsel entspricht. Hierdurch lässt sich die Vorrichtung dahingehend vereinfachen, dass mit geringem messtechnischen Aufwand mehrere Funktionen der Vorrichtung gleichzeitig ausgeführt werden können. Es kann etwa auf eine separate Sensorik zur Ermittlung der eingelegten Fahrstufe oder eine spezielle Sensorik für die Erzeugung der Haptik verzichtet werden.

Erfindungsgemäß ist der wenigstens eine Aktuator als BLDC-Motor ausgebildet. Dabei steht "BLDC" für "Brushless Direct Current". Derartige Motoren zeichnen sich dadurch aus, dass sie einen Anker mit Permanentmagnet aufweisen, der von fest angeordneten Statorspulen umgeben ist, welche mit Gleichstrom betrieben werden. Zum Betreiben des Motors bedarf es einer so genannten "Kommutierung" des Gleichstroms, also die gesteuerte bzw. geregelte Beschaltung der Statorspulen mit Gleichstrom in einer vorgegebenen Taktung. Die Taktung ist abhängig von der Drehposition des Ankers innerhalb des Motors sowie von der gewünschten Stärke der Bewegung oder Kraft, die am Anker erzeugt werden soll. BLDC-Motoren eignen sich auch besonders gut zur Erzeugung eines Drehmomentes im Stand des Motors. Es hat sich gezeigt, dass dieser Motorentyp daher besonders gut zur Erzeugung virtueller Rastierungen, virtueller Anschläge, virtueller mechanischer Widerstände, virtueller Führungen und virtueller Kulissen geeignet ist.

Erfindungsgemäß ist vorgesehen, dass der Aktuator als BLDC-Motor ausgebildet ist und die Steuerung zum Erzeugen eines Kommutierungssignals für den BLDC-Motor unter Einbeziehung des Positionssignals des Positionsaufnehmers ausgebildet ist. Auf diese Weise kann das Positionssignal des Positionsaufnehmers sogar in dreifacher Weise verwendet werden, so dass ein separater Sensor zur Erfassung der Ankerposition des BLDC-Motors für die Zwecke der Kommutierung entfallen kann.

Die Erfindung kann ferner vorsehen, dass das Bedienelement mit der Drehachse verbunden ist. Hierdurch kann der Aufbau der Vorrichtung vereinfacht werden, da auf aufwändige Lagerungen weitgehend verzichtet wird. Insbesondere eignet sich eine solche Ausgestaltung für Vorrichtungen mit nur einer Drehachse, wie beispielsweise rotatorische Fahrstufenwählvorrichtungen.

Das haptische Feedback in der Vorrichtung kann wenigstens "Force-Feedback", also die Erzeugung einer Gegenkraft zur manuellen Benutzereingabe, und/oder Vibration und/oder wenigstens einen virtuellen Endanschlag und/oder eine virtuelle seitliche Führung und/oder eine virtuelle Kulissenführung und/oder eine emulierte Rastierung umfassen. Auf diese Weise lässt sich eine herkömmliche, mechanische Schaltung realitätsgetreu simulieren, wobei sich die Benutzereingaben durch Verstellung des Bedienelementes erst dann auf die tatsächliche Fahrstufe des Fahrzeuges auswirken, wenn gleichzeitig bestimmte Sicherheitskriterien erfüllt sind. Letztere können beispielsweise einen vorbestimmten Geschwindigkeits- oder Drehzahlbereich für den Wechsel der Fahrstufe umfassen. Sofern eine oder mehrere Sicherheitskriterien nicht erfüllt sind, kann die Vorrichtung dies dem Benutzer mittels des haptischen Feedbacks unmittelbar zurückmelden. Beispielsweise kann bei zu hoher Drehzahl für einen Fahrstufenwechsel eine Vibration über das Bedienelement ausgegeben werden, um den Benutzer davon in Kenntnis zu setzen, dass der gewünschte Fahrstufenwechsel nicht möglich oder aus Sicherheitsgründen verhindert wird. Außerdem ist es durch die Erzeugung eines virtuellen Endanschlages möglich, den Benutzer von dem Einlegen einer bestimmten Schaltstellung abzuhalten, um ihn somit zu informieren, dass die gewünschte Umschaltung nicht erfolgt.

Virtuelle seitliche Führungen und virtuelle Kulissenführungen ermöglichen es, dem Benutzer unterschiedliche Schaltschemata zur Verfügung zu stellen, beispielsweise eine H-Schaltungskulisse oder ein monostabiles Bedienelement, welches nach Anwahl einer Schaltstellung selbsttätig in eine Ruheposition zurückkehrt. Eine emulierte Rastierung gibt dem Benutzer haptische Rückmeldung über die tatsächliche Position des Bedienelementes, so dass eine gewünschte Anwahl einer Fahrstufe auch blind erfolgen kann.

Bei der Umsetzung des haptischen Feedbacks als Vibration des Bedienelementes kann es vorgesehen sein, dass die Vibration um wenigstens eine Drehachse der Vorrichtung erfolgt. Dabei wird die Amplitude der Vibration an einer für den Benutzer vorgesehenen Berührungsfläche des Bedienelementes erzeugt und überstreicht dabei eine vorbestimmte Bogenlänge. Vorzugsweise liegt diese Bogenlänge im Bereich von etwa 0,2 mm bis etwa 0,5 mm, insbesondere bei etwa 0,3 mm. Die Vibrationsfrequenz einer solchen Vibration kann vorzugsweise zwischen 5 Hz und 100 Hz, vorzugsweise zwischen 20 Hz und 30 Hz liegen. Es hat sich herausgestellt, dass Vibrationen mit den vorstehend genannten Parametern durch die menschliche Hand besonders gut wahrnehmbar sind und sich dabei ausreichend von den übrigen in einem bewegten oder laufenden Fahrzeug typischerweise vorherrschenden Vibrationen unterscheiden, so dass das Vibrationsfeedback nicht oder nur selten mit einer anderen im Fahrzeug auftretenden Schwingung verwechselt wird.

Bevorzugt kann das Bedienelement entweder als Wählhebel oder als Drehknopf ausgebildet sein. Wählhebel ahmen besonders gut die aus herkömmlichen Fahrzeugen bekannten Vorrichtungen, wie etwa Schalthebel, zum Anwählen von Fahrstufen nach, so dass eine Umgewöhnung des Benutzers kaum erforderlich ist. Drehknöpfe können dagegen besonders raumsparend in einem Armaturenbrett eines Fahrzeugs untergebracht werden.

Gemäß einer Variante der Erfindung kann das Bedienelement als Wählhebel ausgebildet sein, der um zwei Drehachsen schwenk- oder drehbar ausgebildet ist, wobei die Drehachsen im Wesentlichen senkrecht zueinander verlaufen, vorzugsweise sich im Wesentlichen senkrecht schneiden. Auf diese Weise kann der Wählhebel in zwei Raumrichtungen bewegt werden und somit eine Vielzahl unterschiedlicher Positionen annehmen, so dass zweidimensionale Schaltschemata wie etwa eine H-Schaltung oder ein Automatikschema mit separater Tippgasse nachgebildet werden können.

Bevorzugt kann vorgesehen sein, dass jeder Drehachse jeweils nur genau ein Aktuator zugeordnet ist, so dass sämtliche Funktionen zum Ausüben einer Kraft auf das Bedienelement um die jeweilige Achse auf einen Aktuator vereint sind. Dies vereinfacht den Aufbau der Vorrichtung, wodurch diese einfacher anzusteuern und auch kostengünstiger wird.

Bezüglich der oberhalb bereits beschriebenen Schaltschwellen kann vorgesehen sein, dass die Überlappung der Fahrstufenbereiche von benachbarten Schaltstellungen etwa ¼ bis ½, vorzugsweise ⅜ der Breite eines Fahrstufenbereiches beträgt. Hierdurch ist ein besonders guter Kompromiss zwischen der maximalen Auslenkung des Bedienelementes aus der Schaltstellung ohne Fahrstufenwechsel gegenüber der Länge des Schaltweges bis zur nächsten Schaltstellung gegeben.

Erfindungsgemäß weist die Vorrichtung einen mit der Steuerung verbundenen Sensor, beispielsweise einen Berührungssensor auf, welcher einen manuellen Eingriff des Benutzers detektiert und ein entsprechendes Signal an die Steuerung ausgibt. Dies gestattet die Detektion einer zusätzlichen Information darüber, ob der Benutzer das Bedienelement ergreift. Auf der Grundlage dieser Information kann bereits in einen manuellen Schaltmodus umgeschaltet werden noch bevor eine Diskrepanz zwischen Sollposition des Bedienelementes und detektierter Ist-Position desselben auftritt.

Ausgehend von den zuvor beschriebenen Nachteilen liegt der Erfindung ebenfalls die Aufgabe zugrunde, ein verbessertes Verfahren zum Anwählen von Fahrstufen anzugeben, das gegenüber dem Stand der Technik eine einfachere Ansteuerung der Vorrichtung zum Anwählen von Fahrstufen ermöglicht.

Diese Aufgabe wird mit einem Verfahren zum Anwählen von Fahrstufen für ein Getriebe bei einem Kraftfahrzeug gemäß Anspruch 10 gelöst. Es wird mit einer Vorrichtung nach einem der vorhergehenden Ansprüche 1 bis 9 ausgeführt und zeichnet sich dadurch aus, dass der Aktuator das Bedienelement in eine vorbestimmte Position bewegt. Das Verfahren hat die im Zusammenhang mit dem Gegenstand des Anspruchs 1 beschriebenen Vorteile.

Dabei kann insbesondere vorgesehen sein, dass die vorbestimmte Position einer Fahrstufe oder einem Fahrstufenwechsel entspricht, insbesondere einer automatisch eingelegten oder vorgegebenen Fahrstufe.

Das Verfahren kann sich ferner dadurch auszeichnen, dass den unterschiedlichen Fahrstufen unterschiedliche Schaltschwellen des Bedienelementes für ein Umschalten in eine andere Fahrstufe zugeordnet sind und die Steuerung einen Fahrstufenwechsel auslöst, sobald eine Schaltschwelle in Richtung der ihr zugeordneten Schaltstellung überschritten wird. Auf diese Weise wird sichergestellt, dass bei einem manuellen Fahrstufenwechsel durch den Benutzer die Umschaltung in eine andere Fahrstufe zuverlässig erfolgt. Eine Umschaltung von einer ersten in eine zweite Fahrstufe erfolgt somit an einer anderen Position des Bedienelementes als eine Umschaltung von der zweiten Fahrstufe in die erste. Somit liegt stets ein bestimmter Zustand vor und ein so genanntes Einschwingen zwischen zwei auswählbaren Fahrstufen wird vermieden, wenn sich das Bedienelement am Übergang zwischen zwei benachbarten, unterschiedlichen Fahrstufen zugeordneten Positionen befindet.

In Weiterbildung des Verfahrens kann es vorgesehen, dass der Aktuator beim manuellen Bewegen des Bedienelementes durch einen Benutzer eine veränderliche Rückstellkraft erzeugt, die als Force-Feedback einer durch den Benutzer in das Bedienelement eingeleiteten Verstellkraft entgegengesetzt ist. Das Force-Feedback kann dem Benutzer einerseits das Erreichen einer virtuellen Endposition an einem virtuellen Endanschlag signalisieren. Alternativ oder zusätzlich kann eine virtuelle Rastierung mittels der Rückstellkraft erzeugt werden, indem die Rückstellkraft derart moduliert wird, also größer oder kleiner wird, dass bei dem Benutzer der haptische Eindruck entsteht, das Bedienelement bewege sich über eine mechanische Rastierung mit mehreren monostabilen Haltepunkten. Zusätzlich oder alternativ kann die Rückstellkraft derart eingestellt werden, dass sie mit zunehmender Auslenkung des Bedienelementes ebenfalls stärker wird. So kann bei einem etwa linearen Verlauf der Kraftzunahme die Funktion einer mechanischen Rückstellfeder nachgebildet werden, die sich dem Hookeschen Gesetz entsprechend verformt. Eine Kombination dieser Teilfunktionen ist ebenfalls möglich. Beispielsweise kann ein monostabiles Bedienelement mit einer etwa linear zunehmenden Rückstellkraft nachgebildet werden, welches zusätzlich mit einer virtuellen Rastierung überlagert wird.

Entsprechend kann vorgesehen sein, dass die Rückstellkraft abhängig von der Position des Bedienelementes ist. Dabei kann sowohl der Betrag als auch die Richtung der Rückstellkraft positionsabhängig gesteuert bzw. geregelt werden. Im einfachen Fall der Nachbildung einer Rückstellfeder als virtuelle Rückstellfeder steigt die Rückstellkraft mit zunehmender Auslenkung des Bedienelementes an. Bei der komplexeren Nachempfindung einer Rastierung als virtuelle Rastierung, der Nachempfindung einer Längsführung als virtuelle Längsführung oder Nachempfindung einer Kulisse als virtuelle Kulisse werden Betrag und Richtung der Rückstellkraft positionsabhängig derart gesteuert bzw. geregelt, dass das Bedienelement an einer bestimmten Position oder in einem bestimmten Positionsbereich trotz Ausübung einer Verstellkraft des Benutzers verbleibt.

Zusätzlich kann es vorgesehen sein, dass der Aktuator abhängig von der Position des Bedienelementes eine Vibration des Bedienelementes um die wenigstens eine Drehachse oder eine der Drehachsen bewirkt. Dies ermöglicht es, neben der haptischen Rückmeldung durch eine Rückstellkraft ein zusätzliches haptisches Signal zu erzeugen, durch welches der Benutzer über einen bestimmten Zustand seines Fahrzeugs informiert werden kann. So ist es beispielsweise möglich, das Bedienelement beim Erreichen einer Drehzahlgrenze oder bei der Annäherung an eine unzulässige Schaltstellung vibrieren zu lassen. Hier kann etwa der unzulässige Versuch, während der Fahrt die Parksperre eines Automatikgetriebes einzulegen, mit einer Vibration an den Benutzer signalisiert werden.

### Darstellung der Erfindung

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung.

Dabei zeigen zum Teil schematisch:
- Figur 1: einen im Innenraum eines Kraftfahrzeugs angeordneten Drehsteller,
- Figur 2a: einen im Innenraum des Kraftfahrzeugs angeordneten Wählhebel,
- Figur 2b: ein auf einem Display dargestelltes Schaltdiagramm und eine Navigationskarte,
- Figur 3: eine Detailansicht des um eine einzige Achse schwenkbaren Wählhebels mit Lagerung und Antrieb einer erfindungsgemäßen Vorrichtung,

- Figur 4: eine Detailansicht des um zwei Drehachsen schwenkbaren Wählhebels einer erfindungsgemäßen Vorrichtung,
- Figur 5: eine weitere Detailansicht gemäß Fig. 4,
- Figur 6: eine weitere Detailansicht gemäß Fig. 4,
- Figur 7: eine Detailansicht eines an dem Aktuator angeordneten Untersetzungsgetriebes mit einem Positionsaufnehmers,
- Figur 8: ein Blockdiagramm des in der Steuerung implementierten globalen Regelalgorithmus,
- Figur 9: eine schematische Darstellung einer virtuellen Kulissenführung nach Art einer H-Schaltung,
- Figur 10: eine Darstellung einer einzigen Schaltgasse einer virtuellen Kulissenführung,
- Figur 11: eine Darstellung eines Versuches eines verbotenen Fahrstufenwechsels,
- Figur 12: eine Darstellung eines haptischen Feedbacks in Form einer Vibration des Wählhebels und
- Figur 13: ein Diagramm einiger Schaltstellungen in Abhängigkeit von der Position des Wählhebels.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

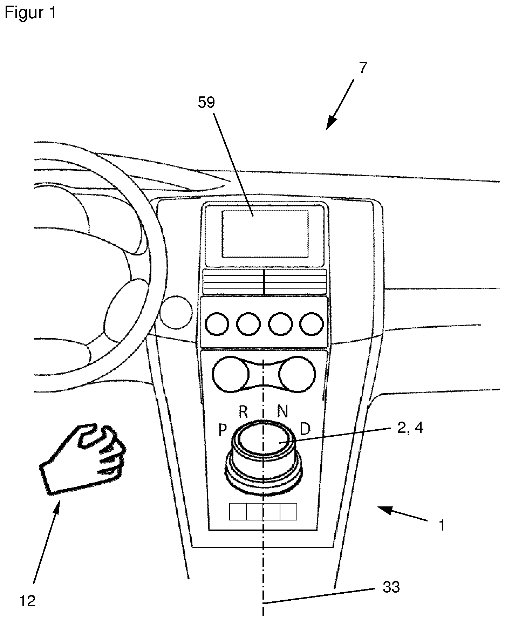

Fig. 1 zeigt eine Vorrichtung 1 zum Anwählen von Fahrstufen bei einem Kraftfahrzeug 7. Ein die jeweilige Fahrstufe auswählendes Bedienelement 2 ist in dieser Ausführungsform als Drehsteller, insbesondere als Drehknopf 4 ausgebildet, welcher bezüglich einer Drehachse 33 drehbar angeordnet ist. Vorliegend befindet sich der Drehknopf 4 in der Mittelkonsole des Kraftfahrzeugs 7, so dass er von einem Benutzer 12 einfach bedient werden kann. Dabei ist die Drehachse 33 etwa parallel zur Hochachse des Kraftfahrzeugs 7 ausgerichtet, so dass der Benutzer 12 das Bedienelement in sitzender Körperhaltung mit angewinkeltem Ellbogen seitlich so greifen kann, dass eine Drehung des Bedienelementes 2 durch eine einfache Handbewegung erfolgen kann. Je nach Bedienkonzept und Anordnung des Bedienelementes 2 im Fahrgastraum kann es aber auch vorgesehen sein, dass die Drehachse 33 geneigt ist.

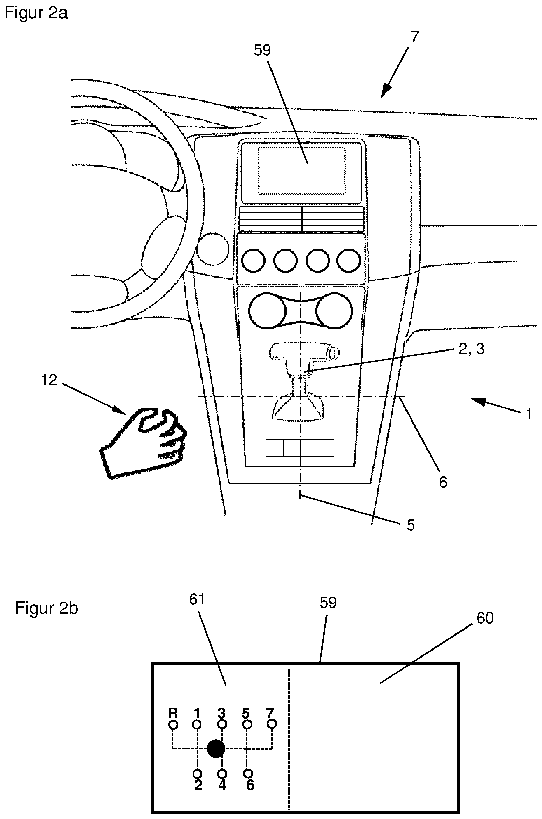

Nach einer Ausführungsform gemäß Fig. 2a ist das Bedienelement 2 als Wählhebel 3 in der Mittelkonsole des Kraftfahrzeugs 7 angeordnet. Der Wählhebel 3 ist vorliegend um die Drehachsen 5, 6 dreh- oder schwenkbar. Im Fahrgastraum des Kraftfahrzeugs 7 befindet sich zudem ein Display 59, welches dem Benutzer 12 bestimmte, vorgegebene oder aber frei auswählbare Informationen anzeigen kann. Auf dem Display 59 kann im Zusammenhang mit der Vorrichtung 1 ein Schaltdiagramm 61 angezeigt werden, aus welchem der Benutzer 12 entnehmen kann, wie das Bedienelement 2 zum Anwählen bestimmter Fahrstufen zu bewegen ist. Ein Beispiel für ein derartiges Schaltdiagramm 61 ist in der Figur 2b dargestellt. Dabei zeigt das Display 59 neben dem Schaltdiagramm 61 wenigstens eine andere Information an, beispielsweise eine Navigationskarte 60 des Fahrzeugnavigationssystems.

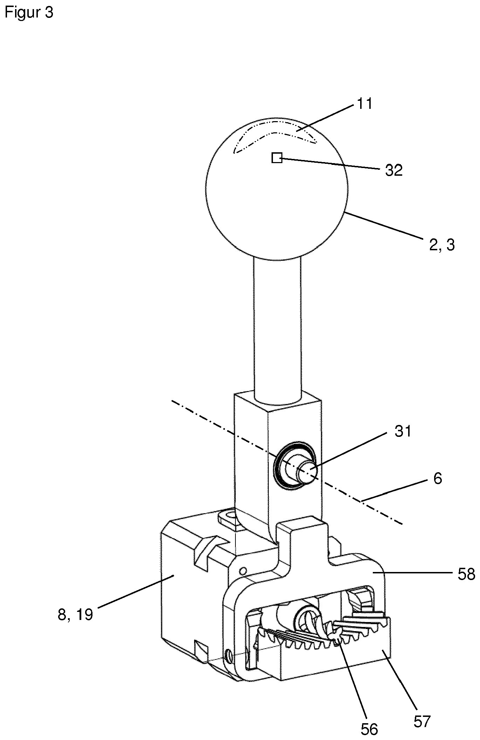

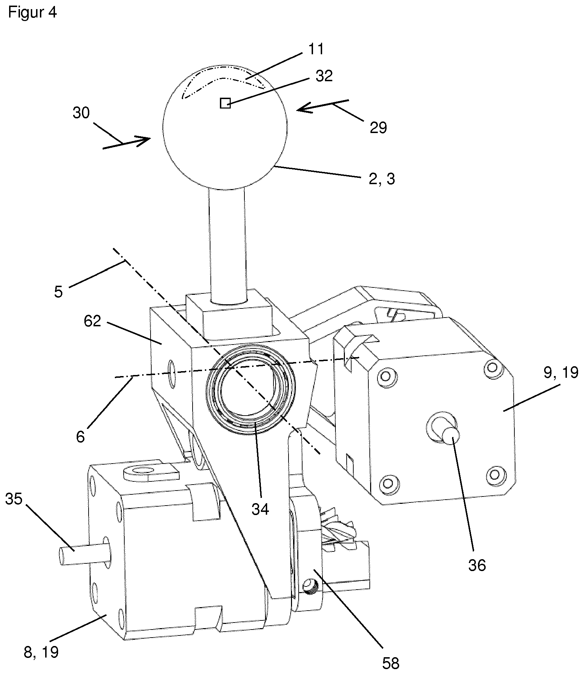

Gemäß Fig. 3 kann alternativ vorgesehen sein, dass der Wählhebel 3 nur um eine einzige Drehachse 6 schwenkbar ist. Bei den Drehachsen 5, 6 kann es sich um virtuelle Achsen handeln, wobei der Wählhebel 3 mittels einer Lagerung so beweglich geführt ist, dass er um die virtuelle Achse 5, 6 schwenkbar wird. Mindestens eine dieser Drehachsen 5, 6 kann auch, wie in Fig. 3 oder Fig. 4 ersichtlich, mit einer Welle 31, 34 zusammenfallen, um die der Wählhebel 3 schwenkbar gelagert ist.

Das Bedienelement 2 ist mit mindestens einem Aktuator 8, 9, welcher als BLDC-Motor 19 ausgebildet ist, mechanisch wirkverbunden. Im vorliegenden Beispiel gemäß Figur 3 ist der Aktuator 8 dazu drehfest mit dem Wählhebel 3 verbunden und greift mit seinem als Zahnrad 56 ausgebildeten Ausgangswelle 35 in ein verzahntes Hohlradsegment 57 ein. Das Hohlradsegment 57 ist an einem Halter 58 ortsfest im Fahrzeug 7 bzw. innerhalb eines Gehäuses der Vorrichtung 1 festgelegt, so dass eine Betätigung des Aktuators 8 mit einer dabei erfolgenden Drehung seines Zahnrades 56 den Wählhebel 3 zusammen mit dem Aktuator 8 um die Drehachse 6 schwenken lässt. Die Aktuatoren 8, 9 können zudem einen Motorwellenfortsatz 35, 36 der Ausgangswelle zum Abgreifen einer Motorbewegung aufweisen.

Gemäß der Ausführungsform der erfindungsgemäßen Vorrichtung 1 nach Fig. 4 wird ein Schwenken des Wählhebels 3 um zwei Drehachsen 5, 6 mittels zweier Aktuatoren 8, 9 bewirkt. Dabei ist jeweils ein Zahnrad 56 an der Ausgangswelle des Aktuators 8, 9 angeordnet, welche in ein jeweils zugeordnetes, verzahntes Hohlradsegment 57 eingreift. Dieses Hohlradsegment 57 ist über einen Halter 58 mit dem Bedienelement 2 verbunden. Auf diese Weise wird durch eine Ansteuerung und Bestromung des Aktuators 8, 9 eine Schwenk- oder Drehbewegung des Bedienelements 2 bewirkt. Im hier gewählten Ausführungsbeispiel nach Figur 4 verbleibt einer der Aktuatoren 9 ortsfest bezüglich des nicht gezeigten Gehäuses der Vorrichtung 1 bzw. ortsfest bezüglich des Kraftfahrzeugs 7, wohingegen der weitere Aktuator 8 zusammen mit dem Bedienelement 2 geschwenkt wird.

Um zu bestimmen, ob der Benutzer 12 das Bedienelement 2 berührt, kann ein Berührungssensor 32 vorgesehen sein, welcher auf einer Berührungsfläche 11 des Bedienelements 2 angeordnet ist. Die Berührungsfläche 11 ist der Teil des Bedienelements 2, an welchen der Benutzer 12 beispielsweise durch seine Hand angreift.

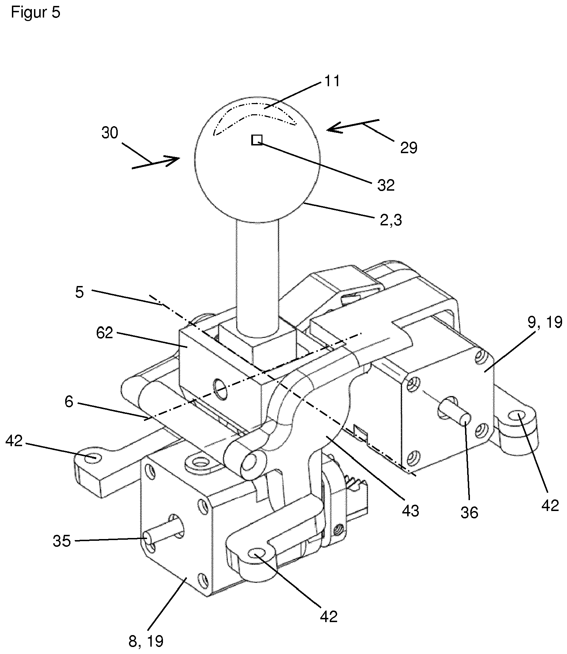

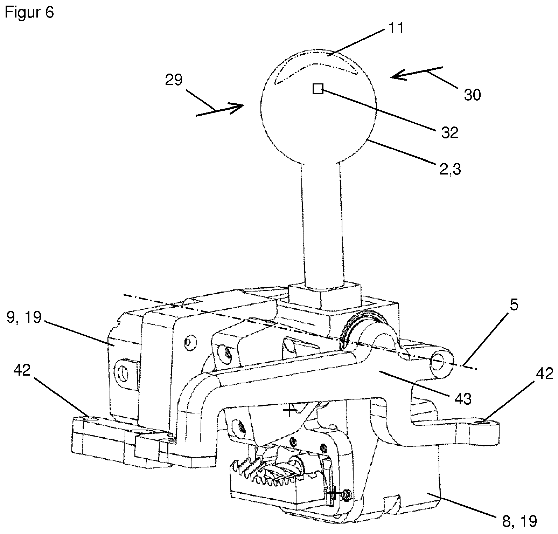

In Fig. 4, Fig. 5 und Fig. 6 ist gezeigt, dass die Vorrichtung 1 Bohrungen 42 aufweist, um die Vorrichtung 1 mittels Nieten, Stiften oder Schrauben am Kraftfahrzeug 7 festzulegen. Die Aktuatoren 8, 9 sind mittels eines Haltebügels 43 mit dem Bedienelement 2 wirkverbunden. Der Haltebügel 43 selbst ist ortsfest an dem nicht gezeigten Gehäuse der Vorrichtung 1 oder am Kraftfahrzeug 7 festgelegt. An dem Haltebügel 43 ist ein Träger 62 drehbar um die erste Drehachse 5 gelagert. Für die Erzeugung einer Drehung des Trägers 62 um die erste Drehachse 5, steht der Träger 62 mit dem ortsfest an dem Haltebügel 43 befestigten Aktuator 9 in Wirkverbindung. An dem Träger 62 ist der Aktuator 8 befestigt, mittels welchem der Wählhebel 3 um die Drehachse 6 verschwenkbar ist. Der Wählhebel 3 ist in dem Träger 62 um die Drehachse 6 schwenkbar und drehfest um die Drehachse 5 gehalten. Somit kann der Wählhebel 3 innerhalb des Trägers 62 um die Drehachse 6, jedoch nur zusammen mit dem Träger 62 und dem Aktuator 8 um die Drehachse 5 schwenken.

Indem die Aktuatoren 8, 9 in Abhängigkeit der Position 15 des Bedienelementes 2 mittels eines von einem Positionsaufnehmer 16 ausgegebenem Positionssignals 17 angesteuert werden, kann ein haptisches Feedback auf den Benutzer 12 erzeugt werden. Eine Steuerung 14 ist zum Erzeugen des haptischen Feedbacks durch entsprechende Ansteuerung der Aktuatoren 8, 9 vorgesehen. Auf der Grundlage von Informationen über die Position des Bedienelementes 2 und/oder weiterer Zustandsinformationen aus dem Kraftfahrzeug 7 kann ein haptisches Feedback über das Bedienelement 2 an den Benutzer 12 ausgegeben werden. Ferner kann die Steuerung 14 in Abhängigkeit von der durch den Benutzer 12 bewirkten Positionsänderung des Bedienelementes 2 ein Fahrstufensteuersignal 25 erzeugen, welches an ein Getriebe oder Getriebesteuergerät oder an ein Fahrstufensteuergerät zum Auslösen eines Fahrstufenwechsels ausgegeben wird.

Darüber hinaus ist es auch möglich, dass mittels der Steuerung 14 nicht nur den oder die Aktuatoren 8, 9 für ein haptisches Feedback zu betätigen, sondern auch auf Grundlage in die Steuerung 14 eingegebener Fahrstufensteuersignale 25 eine selbsttätige Schaltbewegung des Bedienelementes 2 hervorzurufen.

Beispielsweise kann durch den von der Steuerung 14 betätigten Aktuator 8, etwa bei autonomem Fahren des Kraftfahrzeugs 7, das Bedienelement 2 automatisch in diejenige Schaltstellung 27 nachgeführt werden, die durch die autonome Fahrsteuerung vorgegeben wird. Die Schaltstellung 27 ist dabei eine vorbestimmte Position des Bedienelementes 2, die bei dem für das Bedienelement 2 aktuell geltenden Bedienschema einer bestimmten Fahrstufe, etwa P,R,N,D,1-8, oder, bei monostabilen Schaltschemata, einem bestimmten Fahrstufeninkrement oder - dekrement, etwa +1, -1, +2, -2, entspricht.

Eine selbsttätige Schaltbewegung 27 erfolgt beispielsweise in der Art, dass das Bedienelement 2 eines autonom geführten Fahrzeugs beim Umschalten von der Fahrstufe "D", für die Vorwärtsfahrt, in die Schaltstufe "R", für die Rückwärtsfahrt, durch entsprechenden Ansteuerung des oder der Aktuatoren 8, 9 ohne Benutzereingriff in die dazu korrespondierende Stellung bewegt wird. Dies gestattet dem im Kraftfahrzeug 7 befindlichen Benutzer 12 über die sicht- oder tastbare Position des Bedienelementes 2 auf den aktuellen Fahrzustand des Kraftfahrzeugs 7 rückschließen zu können.

Sobald die selbsttätige Schaltbewegung 27 des Bedienelementes 2 aufgrund eines Eingriffes des Benutzers 12 unterbrochen wird, kann unmittelbar ein haptisches Feedback an den Benutzer 12 ausgegeben werden.

Unter einer selbsttätigen Schaltbewegung 27 wird im Rahmen der Erfindung auch eine Rückführung des Bedienelementes 2 aus einer anderen Schaltstellung 27 in die der aktuellen Fahrstufe entsprechenden Schaltstellung 27 verstanden, wenn eine Umschaltung in die der anderen Schaltstellung 27 entsprechenden Fahrstufe nicht erfolgt ist. Wenn der Benutzer 12 beispielsweise bei einer simulierten H-Schaltung das Bedienelement 2 aus der Schaltstellung 27 für die Fahrstufe "Vorwärtsgang 3" in die Schaltstellung 27 für die Fahrstufe "Vorwärtsgang 2" führt, obwohl ein derartiger Fahrstufenwechsel aufgrund einer drohenden Überdrehzahl nicht erfolgt, kann die Steuerung 14 die Aktuatoren 8, 9 derart ansteuern, dass das Bedienelement 2 für die Dauer des manuellen Benutzereingriffs ein haptisches Feedback ausgibt. Sobald der Benutzer 12 das Bedienelement 2 durch Loslassen freigibt, wird dieses aufgrund der selbsttätig ausgeführten Schaltbewegung aktiv und gerichtet in die der aktuellen Fahrstufe entsprechenden Schaltstellung 27, im vorliegenden Beispiel die Schaltstellung 27 "Vorwärtsgang 2" zurückgeführt.

Die Steuerung 14 gleicht dabei die Information über die aktuell eingelegte Fahrstufe bzw. Schaltstellung 27 mit der aktuell vorliegenden Position 15 des Bedienelements 2 ab. Bei einer Abweichung betätigt die Steuerung 14 den Aktuator 8, 9, um das Bedienelement 2 in die vorgegebene Schaltstellung 27 zu überführen.

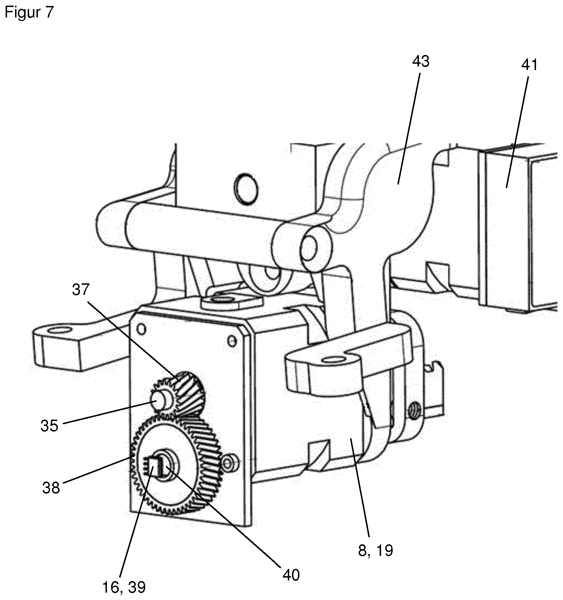

Gemäß Fig. 7 ist der Positionsaufnehmer 16 an dem Aktuator 8 angeordnet, um die von diesem erzeugte Bewegung auszuwerten. Denkbar ist im Sinne der Erfindung, dass ein derartiger Positionsaufnehmer 16 auch an den weiteren Aktuatoren 9 angeordnet ist. Um die Genauigkeit der Messung zu verbessern, ist ein Untersetzungsgetriebe vorgesehen, wobei vorliegend ein Untersetzungszahnrad 38 mit einem an den Motorwellenfortsatz 35 des Aktuators 9 angeordneten Ritzel 37 kämmt. Auf der Welle des Untersetzungszahnrades 38 ist der Sensor 39 angeordnet, welcher vorliegend als Hallsensor ausgebildet ist, der die Rotation eines mit dem Motorwellenfortsatz 35 verbundenen Permanentmagneten 40 auswertet. Der Sensor 39 und das Untersetzungsgetriebe sind jeweils in ein Gehäuse 41 eingebracht. Der Sensor 39 kann statt als Hallsensor auch auf der Grundlage anderer Messprinzipien arbeiten. Denkbar sind hierbei insbesondere auch andere magnetische Messverfahren, optische, akustische, mechanische oder kapazitive Messverfahren, die die Drehung des Motorwellenfortsatzes 35 im Rahmen einer Relativ- oder Absolut-Messung erfassen. Aufgrund der durch die mechanische Wirkverbindung zwischen Motorausgangswelle und dem Bedienelement 2 und der zugrundeliegenden Kinematik, lässt sich die Position des Bedienelementes 2 in der Steuerung 14 rechnerisch ermitteln.

Bei der Verwendung eines Sensors 35 nach dem Prinzip eines Absolutmessverfahrens kann der messbare Drehwinkel begrenzt sein, beispielsweise auf genau eine Umdrehung. Die zwischen Ritzel 37 und Untersetzungszahnrad 38 vorliegende Untersetzung kann dann so gewählt werden, dass das Untersetzungszahnrad 38 sich zwischen den gegenüberliegenden Endstellungen des Bedienelementes 2 höchstens einmal oder weniger als einmal um sich selbst dreht.

Bei der Verwendung eines Sensors 35 nach dem Prinzip eines relativen, inkrementellen Messverfahrens, bei welchem nur einzelne Messschritte gezählt werden, kann das Übersetzungsverhältnis zwischen Ritzel 37 und Untersetzungszahnrad 38 auch als Übersetzung ausgebildet sein, um die Auflösung der Messung zu erhöhen.

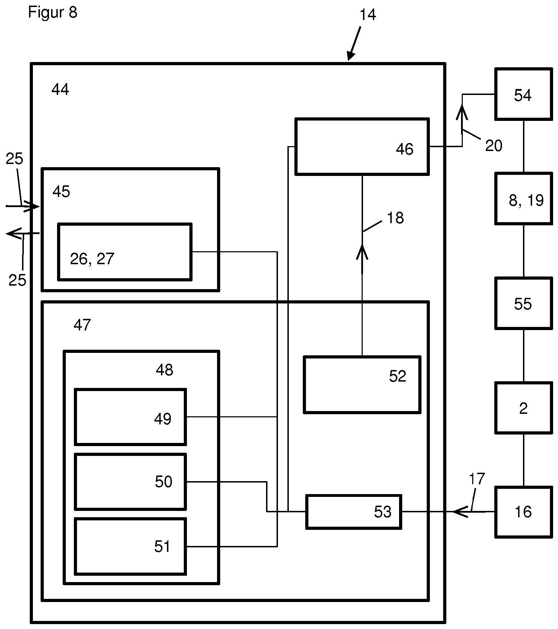

In der Fig. 8 ist der in der Steuerung 14 implementierte globale Regelalgorithmus 44 schematisch im Zusammenwirken mit den weiteren Komponenten der Vorrichtung 1 dargestellt. Die Steuerung 14 ist, wie in der Fig. 8 auf der rechten Seite gezeigt, innerhalb der Vorrichtung mit der Motor- Leistungselektronik 54 sowie mit einem Positionsaufnehmer 16, beispielsweise mit dem Sensor 39 verbunden. Zudem ist in der Steuerung 14 ein soft- und/oder hardwareimplementiertes Modul 45 vorgesehen, welches Fahrstufensteuersignalen 25 an ein übergeordnetes Steuergerät des Kraftfahrzeugs 7 oder an dessen Getriebe sendet oder Fahrstufensteuersignale 25 von diesen empfängt.

Die Motor-Leistungselektronik 54 ist mit dem oder den Aktuatoren 8, 9 verbunden. Im vorliegenden Ausführungsbeispiel sind beide Aktuatoren 8, 9 als BLDC-Motor 19 ausgeführt und mit dem Bedienelement 2 verbunden. Ein Getriebe 55, welches im vorliegenden Beispiel als Zahnrad 56 und innenverzahntes Hohlrad 57 ausgebildet ist, kann für eine Unter- oder Übersetzung der Aktuatorbewegung sorgen, wie dies in den Fig. 2 bis 7 gezeigt ist. Die Position des Bedienelementes 2 wird durch den Positionsaufnehmer 16 detektiert, welcher ein der Position zugeordnetes Positionssignal 17 ausgibt. Das Positionssignal 17 wird in die Steuerung 14 eingegeben und dort in einem soft- und/oder hardwareimplementierten Modul 53 in eine Ist-Position umgerechnet. Wie durch die Verbindungslinien in der Fig. 8 erkennbar ist, wird die ermittelte Ist-Position an das Modul 45 übermittelt, um das Fahrstufensteuersignal 25 zu erzeugen.

Gleichzeitig wird die Ist-Position 53 an einen untergeordneten Regelalgorithmus 47 zur Steuerung der Haptik weitergeleitet. Der Regelalgorithmus 47 enthält beispielsweise drei soft- und/oder hardwareimplementierte Module 49, 50, 51, die zur Erzeugung von Sollwertanteilen für Rückstellung, Vibration sowie Rastierung des Bedienelementes 2 dienen.

Das Modul 49 erzeugt einen Sollwertanteil der Position des Bedienelementes 2, der erforderlich ist, um eine Rückstellung des Bedienelementes 2 in eine vorgegebene Position zu bewirken. Dies dient beispielsweise dem Nachempfinden einer mechanischen Rückholfeder oder der Erzeugung eines Force-Feedback-Effektes etwa mit ansteigender Verstellkraft. Das Modul 49 kann auch zur Umsetzung einer virtuellen Kulisse oder Längsführung dienen, um bspw. einen Wählhebel 3 durch seitlich stark ansteigende Rückstellkräfte innerhalb einer simulierten Schaltgasse zu halten.

Das Modul 50 erzeugt einen Sollwertanteil der Position des Bedienelementes 2, der erforderlich ist, um eine Vibration des Bedienelementes 2 zu bewirken. Dies dient beispielsweise der Erzeugung eines spürbaren haptischen Feedbacks zum signalisieren einer nicht vorgesehenen Benutzeraktion oder eines Schaltvorschlags an einer Drehzahlgrenze des Fahrzeugmotors.

Das Modul 51 erzeugt einen Sollwertanteil der Position des Bedienelementes 2, der erforderlich ist, um eine virtuelle Rastierung zu erzeugen.

Die durch die Module 49, 50 und 51 erzeugten Sollwertanteile werden in einem übergeordneten, soft- und/oder hardwareimplementierten Modul 48 zu einer Sollwertvorgabe verrechnet. Die Sollwertvorgabe wird in einem übergeordneten soft- und/oder hardwareimplementierten Modul 52 der Ist-Position gegenübergestellt und unter Berücksichtigung von Regelungsparametern zu einer Stellgröße in Form eines Kontrollsignals 18 verrechnet. Somit wird die mittels des Positionsaufnehmers 16 detektierte Ist-Position mehrfach genutzt.

In einer nicht erfindungsgemäßen Variante, bei welcher die Aktuatoren 8, 9 nicht als BLDC sondern als bürstenbehaftete Motoren ausgebildet sind, wird das Kontrollsignal 18 direkt an die Motor-Leistungselektronik 54 ausgegeben, um die Aktuatoren 8, 9 anzusteuern.

In dem vorliegenden erfindungsgemäßen Ausführungsbeispiel mit BLDC-Motoren 19 wird die Motor-Leistungselektronik 54 nicht direkt mit dem Kontrollsignal 18 sondern mit einem daraus erzeugten Kommutierungssignal 20 angesteuert. Denn die in einem BLDC-Motor am Stator angeordneten Spulen werden zum Betätigen des Motors in einer bestimmten Reihenfolge und einem bestimmten Takt angesteuert. Takt und Reihenfolge sind direkt abhängig von der Drehposition des mit einem Permanentmagneten versehenen Rotors. Zur Erzeugung des Kommutierungssignals 20 wird daher in dem soft- und/oder hardwareimplementierten Modul 46 sowohl das Kontrollsignal 18 als auch die im Modul 53 ermittelte Ist-Position des Bedienelementes 2 herangezogen, da letztere in direktem und festem kinematischen Zusammenhang mit der Rotorposition steht. Bei dem vorliegenden Ausführungsbeispiel wird somit das Positionssignal 17 des Positionsaufnehmers 16 dreifach, nämlich zur Auswertung und Erzeugung des Fahrstufensteuersignales 25, zur Erzeugung der Haptik und zur Erzeugung des Kommutierungssignals 20 verwendet.

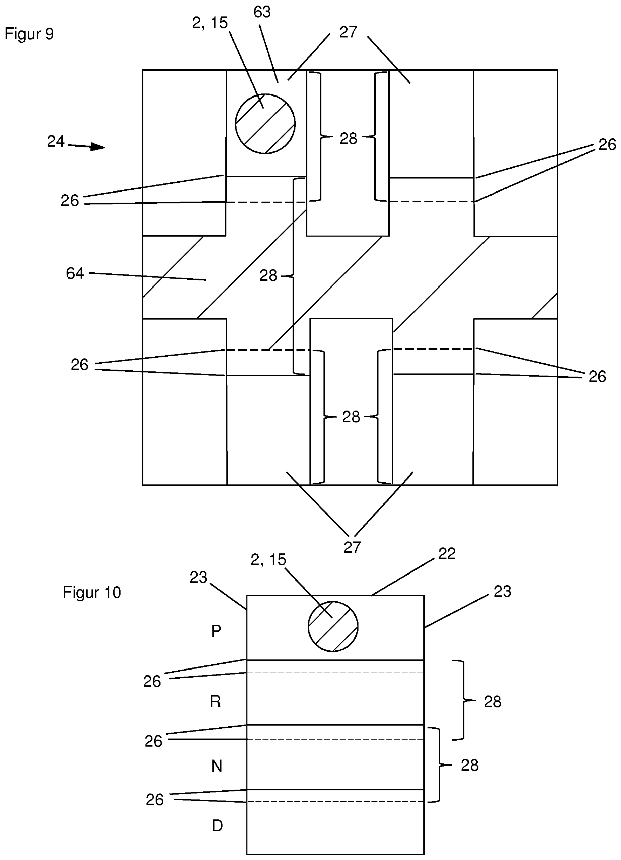

Aus Fig. 9 ist eine virtuelle Kulissenführung 24 ersichtlich. Im hier gewählten Ausführungsbeispiel nach Art einer H-Schaltung sind insgesamt fünf Schaltstellungen 27 vorgesehen, die in virtuellen Schaltgassen liegen. Jede dieser Schaltstellungen 27 weist eine unterschiedliche Schaltschwelle 26 des Bedienelements 2 für ein Umschalten in eine andere Fahrstufe bzw. Schaltstellung 27 auf. Die Schaltschwellen 26 definieren einen sich um die jeweilige Schaltstellung 27 einer Fahrstufe erstreckenden Fahrstufenbereich 28, innerhalb dessen das Bedienelement 2 ohne Auslösung eines Fahrstufensteuersignals 25 bewegbar ist.

Im vorliegenden Beispiel gemäß Fig. 9 befindet sich das Bedienelement 2 in der Stellung oben links, die bei einer herkömmlichen H-Schaltung der Schaltstellung 63 "Vorwärtsgang 1" entspricht. Für den Fall eines Fahrstufenwechsels ist das Bedienelement 2 aus der ihm zugeordneten Schaltstellung 63 "Vorwärtsgang 1" über die durch die durchgezogene Linie dargestellte Schaltschwelle 26 und die gestrichelt dargestellte Linie hinaus zu bewegen. Beim Überqueren der gestrichelte dargestellten Schaltschwelle 26, wird dem Bedienelement 2 die benachbarte Schaltstellung 64 "Neutral" zugeordnet und ein entsprechendes Fahrstufensteuersignal 25 ausgegeben. In umgekehrter Richtung muss das Bedienelement 2 jedoch über die als durchgezogene Linie dargestellte Schaltschwelle 26 in Richtung der Schaltstellung 63 bewegt werden, um eine erneute Zuordnung der Schaltstellung 63 zu erreichen. Insoweit überlappen sich die Fahrstufenbereiche 28 der Schaltstellungen 63 und 64 und jede Schaltstellung 27 weist eine unterschiedliche Schaltschwelle 26 auf.

In der Fig.10 sind unterschiedliche Schaltstellungen 27 beispielhaft mit den Buchstaben "P, R, N, D" gekennzeichnet, die in einer einzigen Schaltgasse einer virtuellen Kulissenführung 24 geführt sind. Für jeden Fahrstufenwechsel gilt jeweils eine Schaltschwelle 26, wobei die mit der durchgezogenen Linie eingezeichneten Schaltschwellen 26 für ein Umschalten in Richtung der Schaltstellung "P" gelten. Die mit jeweils einer gestrichelten Linie eingezeichneten Schaltschwellen 26 gelten für eine Umschalten der Schaltstellungen 27 in Richtung der Schaltstellung "D". Beispielhaft ist in der Fig. 10 die Überlappung der Fahrstufenbereiche 28 eingezeichnet.

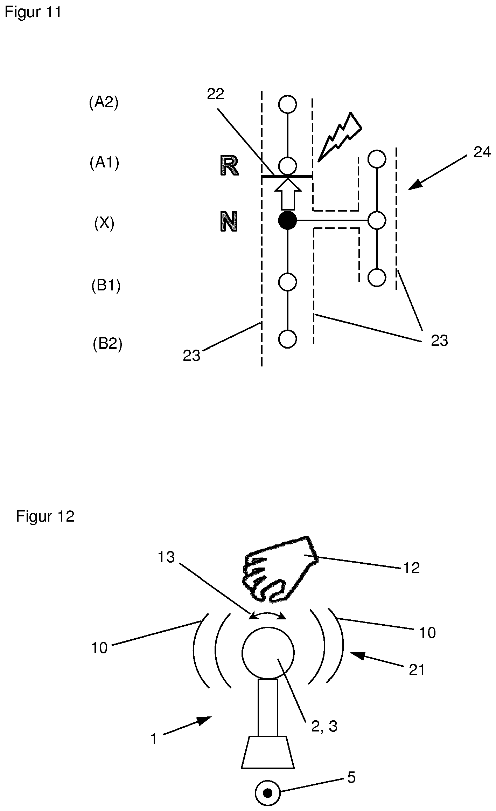

Die Fig.11 zeigt schematisch den Versuch eines verbotenen Fahrstufenwechsels aus der Neutralstellung in den Rückwärtsgang. Wenn bei Vorwärtsfahrt ein Einlegen des Rückwärtsganges nicht erfolgen darf, simuliert die Vorrichtung 1 einen virtuellen Endanschlag 22, der verhindert, dass der Benutzer 12 die Schaltstellung "R" erreicht. Da das Bedienelement 2 durch virtuelle seitliche Führungen 23 seitlich nicht ausweichen kann und der virtuelle Endanschlag 22 die Bewegungsmöglichkeit des Bedienelemente 2 ebenfalls beschränkt, kann der Benutzer 12 das Bedienelement 2 ausschließlich zurück in die Schaltstellung "N" bewegen. Gleichzeitig kann dem Benutzer der verbotene Fahrstufenwechsel durch haptisches Feedback in Form einer Vibration 21 signalisiert werden.

In Fig. 12 ist das als Wählhebel 3 ausgebildete Bedienelement 2 ersichtlich, welches haptisches Feedback auf die Hand des Benutzers 12 gibt, indem es eine Vibrationsbewegung um die Drehachse 5 ausführt. Dabei schwenkt der Wählhebel 3 mit einer für die menschliche Hand deutlich spürbaren Frequenz um die Drehachse 5. Die Vibrationsfrequenz kann zwischen 5 Hz und 100 Hz, vorzugsweise zwischen 20 Hz und 30 Hz liegen. Die Amplitude 10 der Vibration 21 an der Berührungsfläche 11 des Bedienelements 2 überstreicht dabei eine vorbestimmte Bogenlänge 13, welche im Bereich von etwa 0,2 mm bis etwa 0,5 mm liegt. Die Vibration 21 kann gleichzeitig oder alternativ auch um die Drehachse 6 erfolgen.

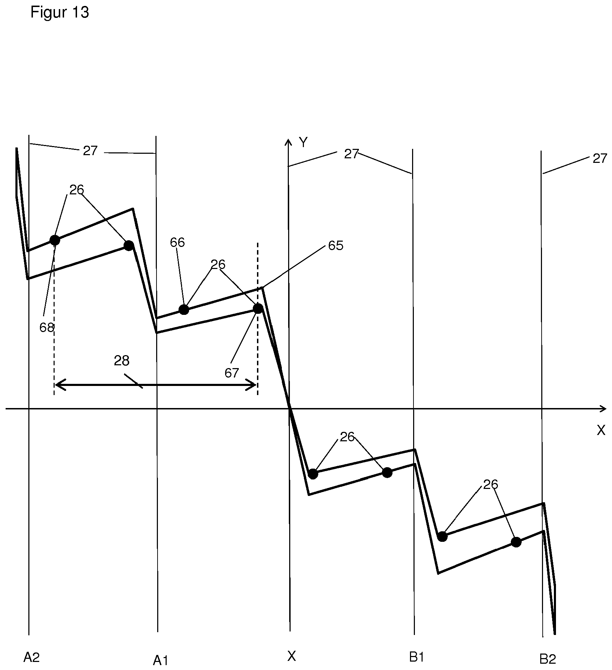

In der Fig. 13 ist schematisch der Verlauf der Verstellkraft 30 und der ihr entgegengesetzten Rückstellkraft 29 diagrammatisch dargestellt, wobei der Schwenkwinkel des Bedienelementes 2 auf der X-Achse und die durch die Vorrichtung 1 aufgebrachte Rückstellkraft 29 auf der Y-Achse aufgetragen sind. Fig. 13 zeigt den Kraftverlauf, die Schaltstellungen 27 und die Schaltschwellen 26 für ein monostabiles Bedienelement 2, welches aus seiner stabilen Mittelstellung "X" in zwei Richtungen zu den Schaltstellungen 27 auslenkbar ist. Dabei ist einer Auslenkung zu den Schaltstellungen "A1" bzw. "B1" ein Inkrement bzw. Dekrement um eine Fahrstufe, bei den Schaltstellungen "A2" bzw. "B2" ein Inkrement bzw. Dekrement um zwei Fahrstufen zugeordnet. Der Kraftverlauf der Rückstellkraft 29 auf das Bedienelement 2 simuliert eine Rastierung und eine mit dem Bedienelement 2 gekoppelte Rückstellfeder. Die Funktion der Rückstellfeder ist an dem generell erkennbaren linearen Verlauf mit negativer Steigung zu erkennen, durch welche die Rückstellkraft bei negativen Drehwinkeln positiv ist und bei positiven Drehwinkeln negativ ist. Dem überlagert ist ein gezackter Kraftverlauf, welcher das Überfahren einer virtuellen Rastierung simuliert. Außerdem unterliegt der Kraftverlauf einer Hysterese, durch welche die Rückstellkraft 29 bei manueller Auslenkung des Bedienelementes 2 durch den Benutzer 12 gemäß der nach dem Betrag in Y-Richtung höheren Kurve folgt. In der Gegenrichtung wird die Rückstellkraft erniedrigt und verläuft auf der jeweils nach dem Betrag in Y-Richtung niedrigeren Kurve. Dies sorgt für eine sanftere Rückkehrbewegung des Bedienelementes 2 in die stabile Ausgangsstellung "X".

Zur Detektion der Anwahl eines Inkrements, beispielsweise gemäß Schaltstellung 27 "A1" ausgehend von der Ruhestellung "X" wird das Bedienelement 2 in Richtung der Schaltstellung A1 bewegt und überfährt dabei im Kraftverlauf ein erstes Maximum 65, welches dem Benutzer 12 das baldige Erreichen der Schaltstellung 27 "A1" signalisiert. Kurz vor dem Erreichen der Schaltstellung 27 "A1" überfährt das Bedienelement 2 die Schaltschwelle 26 an der Position 66. Da dem Bedienelement 2 zuvor die Schaltstellung 27 "X" zugeordnet war, wird die Zuordnung nun auf die Schaltstellung 27 "A1" geändert. Das Bedienelement 2 lässt sich nun in dem Fahrstufenbereich 28 zwischen den Positionen 67 und 68 und den diesen Positionen zugeordneten Schaltschwellen 26 bewegen, ohne dass die Zuordnung von A1 nach X oder von A1 nach A2 geändert wird. Bei Erreichen der Schaltschwellen 26 an den Positionen 67 und 68 erfolgt jedoch eine Umschaltung in der Zuordnung auf "X" bzw. A2.

Durch die in positiver und negativer X-Richtung ansteigende Rückstellkraft 29 sowie die überlagerte, virtuelle Rastierung erhält der Benutzer 12 eine haptische Rückmeldung über die Position des Bedienelementes 2 sowie die zugehörige Schaltstellung 27.

### Bezugszeichenliste

- 1: Fahrstufenwählvorrichtung für ein Kraftfahrzeug
- 2: Bedienelement
- 3: Wählhebel
- 4: Drehknopf
- 5: Drehachse
- 6: Drehachse
- 7: Kraftfahrzeug
- 8: Aktuator
- 9: Aktuator
- 10: Amplitude
- 11: Berührungsfläche
- 12: Benutzer
- 13: Bogenlänge
- 14: Steuerung
- 15: Position des Bedienelementes
- 16: Positionsaufnehmer
- 17: Positionssignal
- 18: Kontrollsignal
- 19: BLDC-Motor
- 20: Kommutierungssignal
- 21: Vibration
- 22: Virtueller Endanschlag
- 23: Virtuelle seitliche Führung
- 24: Virtuelle Kulissenführung
- 25: Fahrstufensteuersignal
- 26: Schaltschwelle
- 27: Schaltstellung
- 28: Fahrstufenbereich
- 29: Rückstellkraft
- 30: Verstellkraft
- 31: Welle
- 32: Berührungssensor
- 33: Drehachse
- 34: Welle
- 35: Motorwellenfortsatz
- 36: Motorwellenfortsatz
- 37: Ritzel
- 38: Untersetzungszahnrad
- 39: Sensor (Hallsensor)
- 40: Permanentmagnet
- 41: Sensorgehäuse
- 42: Bohrung
- 43: Haltebügel
- 44: Regelalgorithmus Schaltung
- 45: Modul
- 46: Modul
- 47: Regelalgorithmus Haptik
- 48: Modul
- 49: Modul
- 50: Modul
- 51: Modul
- 52: Modul
- 53: Modul
- 54: Motor-Leistungselektronik
- 55: Getriebe
- 56: Zahnrad
- 57: Hohlradsegment
- 58: Halter
- 59: Display
- 60: Navigationskarte
- 61: Schaltdiagramm
- 62: Träger
- 63: Schaltstellung "Vorwärtsgang 1"
- 64: Schaltstellung "Neutral"
- 65: Maximum
- 66: Position
- 67: Position
- 68: Position

## Patentansprüche

1. Vorrichtung (1) zum Anwählen von Fahrstufen für ein Getriebe bei einem Kraftfahrzeug (7) mit einem die jeweilige Fahrstufe auswählenden Bedienelement (2), welches bezüglich wenigstens einer Drehachse (5, 6) manuell schwenk- oder drehbar ausgebildet ist, wobei mittels eines auf das Bedienelement (2) wirkenden Aktuators (8) ein haptisches Feedback auf einen Benutzer (12) erzeugbar ist, wobei ein Positionsaufnehmer (16) zur Bestimmung der Schwenk- oder Drehposition des Bedienelementes (2) bezogen auf die wenigstens eine Drehachse (5, 6) und zur Erzeugung eines entsprechenden Positionssignals (17) vorgesehen ist und wobei eine, in Abhängigkeit der Position (15) des Bedienelementes (2), den Aktuator (8) betätigende und Fahrstufensteuersignale (25) erzeugende Steuerung (14) vorgesehen ist, welche sowohl zur Ermittlung einer Schaltstellung des Bedienelementes (2) als auch zur Erzeugung eines Kontrollsignals (18) für eine Bewegung und das haptische Feedback des Bedienelementes (2) unter Einbeziehung des Positionssignals (17) des Positionsaufnehmers (16) ausgebildet ist, wobei das Bedienelement (2) neben der manuellen Betätigung durch den Benutzer (12) auch für die selbsttätige Schaltbewegung durch den von der Steuerung (14) betätigten Aktuator (8) ausgebildet ist, **dadurch gekennzeichnet, dass** die Vorrichtung (1) einen mit der Steuerung (14) verbundenen Sensor (32) aufweist, welcher einen manuellen Eingriff des Benutzers (12) am Bedienelement (2) detektiert und ein entsprechendes Signal an die Steuerung (14) ausgibt, wobei der Aktuator (8) als BLDC-Motor (19) ausgebildet ist und die Steuerung (14) zum Erzeugen eines Kommutierungssignals (20) für den BLDC-Motor (19) unter Einbeziehung des Positionssignals (17) des Positionsaufnehmers (16) ausgebildet ist.

2. Vorrichtung (1) zum Anwählen von Fahrstufen für ein Getriebe bei einem Kraftfahrzeug (7) nach Anspruch 1, **dadurch gekennzeichnet, dass** der Positionsaufnehmer (16) an dem Aktuator (8) angeordnet ist.

3. Vorrichtung (1) zum Anwählen von Fahrstufen für ein Getriebe bei einem Kraftfahrzeug (7) nach einem der vorhergehenden Ansprüche, **dadurch gekennzeichnet, dass** das haptische Feedback wenigstens Force-Feedback und/oder Vibration (21) und/oder wenigstens einen virtuellen Endanschlag (22) und/oder eine virtuelle seitliche Führung (23) und/oder eine virtuelle Kulissenführung (24) und/oder eine emulierte Rastierung umfasst.

4. Vorrichtung (1) zum Anwählen von Fahrstufen für ein Getriebe bei einem Kraftfahrzeug (7) nach einem der vorhergehenden Ansprüche, **dadurch gekennzeichnet, dass** das haptische Feedback eine Vibration des Bedienelementes (2) um wenigstens eine Drehachse (5, 6) umfasst, wobei die Amplitude (10) der Vibration an einer für den Benutzer (12) vorgesehenen Berührungsfläche (11) des Bedienelementes (2) eine Bogenlänge (13), vorzugsweise von etwa 0,2 mm bis etwa 0,5 mm, insbesondere 0,3 mm aufweist.

5. Vorrichtung (1) zum Anwählen von Fahrstufen für ein Getriebe bei einem Kraftfahrzeug (7) nach einem der vorhergehenden Ansprüche, **dadurch gekennzeichnet, dass** das haptische Feedback eine Vibration des Bedienelementes (2) umfasst, mit einer Vibrationsfrequenz zwischen 5 Hz und 100 Hz, vorzugsweise zwischen 20 Hz und 30 Hz.

6. Vorrichtung (1) zum Anwählen von Fahrstufen für ein Getriebe bei einem Kraftfahrzeug (7) nach einem der vorhergehenden Ansprüche, **dadurch gekennzeichnet, dass** das Bedienelement (2) entweder als Wählhebel (3) oder als Drehknopf (4) ausgebildet ist.

7. Vorrichtung (1) zum Anwählen von Fahrstufen für ein Getriebe bei einem Kraftfahrzeug (7) nach Anspruch 6, **dadurch gekennzeichnet, dass** der Wählhebel (3) um zwei Drehachsen (5, 6) schwenk- oder drehbar ausgebildet ist, wobei die Drehachsen (5, 6) im Wesentlichen senkrecht zueinander verlaufen, vorzugsweise sich im Wesentlichen senkrecht schneiden.

8. Vorrichtung (1) zum Anwählen von Fahrstufen für ein Getriebe bei einem Kraftfahrzeug (7) nach Anspruch 7, **dadurch gekennzeichnet, dass** jeder Drehachse (5, 6) jeweils nur ein Aktuator (8, 9) zugeordnet ist.

9. Vorrichtung (1) zum Anwählen von Fahrstufen für ein Getriebe bei einem Kraftfahrzeug (7) nach einem der vorhergehenden Ansprüche, **dadurch gekennzeichnet, dass** der Sensor als Berührungssensor (32) ausgebildet ist.

10. Verfahren zum Anwählen von Fahrstufen für ein Getriebe bei einem Kraftfahrzeug (7) mit einer Vorrichtung (1) nach einem der vorhergehenden Ansprüche 1 bis 9, **dadurch gekennzeichnet, dass** der Aktuator (8) das Bedienelement (2) in eine vorbestimmte Position (15) bewegt.

11. Verfahren zum Anwählen von Fahrstufen für ein Getriebe bei einem Kraftfahrzeug (7) nach Anspruch 10, **dadurch gekennzeichnet, dass** die vorbestimmte Position (15) einer Fahrstufe entspricht, insbesondere einer automatisch eingelegten oder vorgegebenen Fahrstufe.

12. Verfahren zum Anwählen von Fahrstufen für ein Getriebe bei einem Kraftfahrzeug (7) nach einem der Ansprüche 10 oder 11, **dadurch gekennzeichnet, dass** den unterschiedlichen Fahrstufen unterschiedliche Schaltschwellen (26) des Bedienelementes (2) für ein Umschalten in eine andere Fahrstufe zugeordnet sind und die Steuerung (14) einen Fahrstufenwechsel auslöst, sobald eine Schaltschwelle (26) in Richtung der ihr zugeordneten Schaltstellung (27) überschritten wird.

13. Verfahren zum Anwählen von Fahrstufen für ein Getriebe bei einem Kraftfahrzeug (7) nach Anspruch 12, **dadurch gekennzeichnet, dass** der Aktuator (8) beim manuellen Bewegen des Bedienelementes (2) durch einen Benutzer (12) eine veränderliche Rückstellkraft (29) erzeugt, die als Force-Feedback einer durch den Benutzer (12) in das Bedienelement (2) eingeleiteten Verstellkraft (30) entgegengesetzt ist.

14. Verfahren zum Anwählen von Fahrstufen für ein Getriebe bei einem Kraftfahrzeug (7) nach Anspruch 13, **dadurch gekennzeichnet, dass** die Rückstellkraft (29) abhängig von der Position (15) des Bedienelementes (2) ist.

15. Verfahren zum Anwählen von Fahrstufen für ein Getriebe bei einem Kraftfahrzeug (7) nach einem der vorhergehenden Ansprüche 12 bis 14, **dadurch gekennzeichnet, dass** der Aktuator (8) abhängig von der Position (15) des Bedienelementes (2) eine Vibration des Bedienelementes (2) um die wenigstens eine Drehachse (5, 6) bewirkt.

## Claims

1. Device (1) for selecting drive stages for a transmission in a motor vehicle (7), with an operator control element (2) which selects the respective drive stage and is designed to be pivotable or rotatable manually with respect to at least one axis of rotation (5, 6), wherein haptic feedback to a user (12) can be generated by means of an actuator (8) acting upon the operator control element (2), wherein a position pickup (16) is provided for determining the pivoting or rotational position of the operator control element (2) with respect to the at least one axis of rotation (5, 6) and for generating a corresponding position signal (17), and wherein a controller (14) is provided which, depending on the position (15) of the operator control element (2), actuates the actuator (8) and generates drive stage control signals (25) and which is designed both for determining a shift position of the operator control element (2) and for generating a control signal (18) for a movement and the haptic feedback of the operator control element (2) taking into account the position signal (17) of the position pickup (16), wherein the operator control element (2) in addition to manual actuation by the user (12) is also designed for the automatic shifting movement by the actuator (8), which is actuated by the controller (14), **characterized in that** the device (1) has a sensor (32) which is connected to the controller (14) and which detects a manual engagement of the user (12) on the operator control element (2) and outputs a corresponding signal to the controller (14), wherein the actuator (8) is designed as a BLDC motor (19), and the controller (14) is designed for generating a commutation signal (20) for the BLDC motor (19) taking into account the position signal (17) of the position pickup (16).

2. Device (1) for selecting drive stages for a transmission in a motor vehicle (7) according to Claim 1, **characterized in that** the position pickup (16) is arranged on the actuator (8).

3. Device (1) for selecting drive stages for a transmission in a motor vehicle (7) according to one of the preceding claims, **characterized in that** the haptic feedback comprises at least force feedback and/or vibration (21) and/or at least one virtual end stop (22) and/or a virtual lateral guide (23) and/or a virtual gate guide (24) and/or an emulated detent.

4. Device (1) for selecting drive stages for a transmission in a motor vehicle (7) according to one of the preceding claims, **characterized in that** the haptic feedback comprises a vibration of the operator control element (2) about at least one axis of rotation (5, 6), wherein the amplitude (10) of the vibration on a contact surface (11), which is provided for the user (12), of the operator control element (2) has an arc length (13), preferably of approximately 0.2 mm to approximately 0.5 mm, in particular 0.3 mm.

5. Device (1) for selecting drive stages for a transmission in a motor vehicle (7) according to one of the preceding claims, **characterized in that** the haptic feedback comprises a vibration of the operator control element (2), with a vibration frequency between 5 Hz and 100 Hz, preferably between 20 Hz and 30 Hz.

6. Device (1) for selecting drive stages for a transmission in a motor vehicle (7) according to one of the preceding claims, **characterized in that** the operator control element (2) is designed either as a selector lever (3) or as a rotary knob (4).

7. Device (1) for selecting drive stages for a transmission in a motor vehicle (7) according to Claim 6, **characterized in that** the selector lever (3) is designed to be pivotable or rotatable about two axes of rotation (5, 6), wherein the axes of rotation (5, 6) run substantially perpendicularly to each other, preferably intersect substantially perpendicularly.

8. Device (1) for selecting drive stages for a transmission in a motor vehicle (7) according to Claim 7, **characterized in that** in each case only one actuator (8, 9) is assigned to each axis of rotation (5, 6).

9. Device (1) for selecting drive stages for a transmission in a motor vehicle (7) according to one of the preceding claims, **characterized in that** the sensor is designed as a touch sensor (32).

10. Method for selecting drive stages for a transmission in a motor vehicle (7) with a device (1) according to one of the preceding Claims 1 to 9, **characterized in that** the actuator (8) moves the operator control element (2) into a predetermined position (15).

11. Method for selecting drive stages for a transmission in a motor vehicle (7) according to Claim 10, **characterized in that** the predetermined position (15) corresponds to a drive stage, in particular to an automatically engaged or predefined drive stage.

12. Method for selecting drive stages for a transmission in a motor vehicle (7) according to either of Claims 10 and 11, **characterized in that** the different drive stages are assigned different shifting thresholds (26) of the operator control element (2) for shifting into a different drive stage, and the controller (14) triggers a drive stage change as soon as a shifting threshold (26) in the direction of the shift position (27) assigned thereto is exceeded.

13. Method for selecting drive stages for a transmission in a motor vehicle (7) according to Claim 12, **characterized in that**, when the operator control element (2) is moved manually by a user (12), the actuator (8) generates a variable restoring force (29) which, as force feedback, is opposed to an adjustment force (30) introduced into the operator control element (2) by the user (12).

14. Method for selecting drive stages for a transmission in a motor vehicle (7) according to Claim 13, **characterized in that** the restoring force (29) is dependent on the position (15) of the operator control element (2).

15. Method for selecting drive stages for a transmission in a motor vehicle (7) according to one of the preceding Claims 12 to 14, **characterized in that** the actuator (8) brings about a vibration of the operator control element (2) about the at least one axis of rotation (5, 6) depending on the position (15) of the operator control element (2).

## Revendications

1. Dispositif (1) de sélection de vitesses d'une transmission d'un véhicule automobile (7), ledit dispositif comprenant un élément de commande (2) qui sélectionne la vitesse respective et qui est conçu pour pouvoir pivoter ou tourner manuellement par rapport à au moins un axe de rotation (5, 6), un retour haptique pouvant être généré vers un utilisateur (12) au moyen d'un actionneur (8) agissant sur l'élément de commande (2), un capteur de position (16) étant prévu pour déterminer la position de pivotement ou de rotation de l'élément de commande (2) par rapport à au moins un axe de rotation (5, 6) et pour générer un signal de position correspondant (17) et une commande (14) étant prévue qui actionne l'actionneur (8) en fonction de la position (15) de l'élément de commande (2), qui génère des signaux de commande de vitesses (25) et qui est conçue aussi bien pour déterminer une position de commutation de l'élément de commande (2) que pour générer un signal (18) de commande d'un mouvement et du retour haptique de l'élément de commande (2) avec prise en compte du signal de position (17) du capteur de position (16), l'élément de commande (2) étant conçu non seulement pour l'actionnement manuel par l'utilisateur (12) mais également pour le mouvement de commutation automatique par l'actionneur (8) actionné par la commande (14), **caractérisé en ce que** le dispositif (1) comporte un capteur (32) qui est relié à la commande (14), qui détecte une intervention manuelle de l'utilisateur (12) sur l'élément de commande (2) et qui délivre un signal correspondant à la commande (14), l'actionneur (8) étant conçu comme un moteur BLDC (19) et la commande (14) étant conçue pour générer un signal de commutation (20) destiné au moteur BLDC (19) avec prise en compte du signal de position (17) du capteur de position (16).

2. Dispositif (1) de sélection de vitesses d'une transmission d'un véhicule automobile (7) selon la revendication 1, **caractérisé en ce que** le capteur de position (16) est disposé au niveau de l'actionneur (8).

3. Dispositif (1) de sélection de vitesses d'une transmission d'un véhicule automobile (7) selon l'une des revendications précédentes, **caractérisé en ce que** le retour haptique comprend au moins un retour de force et/ou une vibration (21) et/ou au moins une butée d'extrémité virtuelle (22) et/ou un guide latéral virtuel (23) et/ou un guide de coulisse virtuel (24) et/ou un système d'encliquetage émulé.

4. Dispositif (1) de sélection de vitesses d'une transmission d'un véhicule automobile (7) selon l'une des revendications précédentes, **caractérisé en ce que** le retour haptique comprend une vibration de l'élément de commande (2) sur au moins un axe de rotation (5, 6), l'amplitude (10) de la vibration sur une surface de contact (11) de l'élément de commande (2) prévue pour l'utilisateur (12) étant une longueur d'arc (13), de préférence d'environ 0,2 mm à environ 0,5 mm, en particulier de 0,3 mm.

5. Dispositif (1) de sélection de vitesses d'une transmission d'un véhicule automobile (7) selon l'une des revendications précédentes, **caractérisé en ce que** le retour haptique comprend une vibration de l'élément de commande (2) dont la fréquence est comprise entre 5 Hz et 100 Hz, de préférence entre 20 Hz et 30 Hz.

6. Dispositif (1) de sélection de vitesses d'une transmission d'un véhicule automobile (7) selon l'une des revendications précédentes, **caractérisé en ce que** l'élément de commande (2) est réalisé soit sous la forme d'un levier de sélection (3) soit sous la forme d'un bouton rotatif (4).

7. Dispositif (1) de sélection de vitesses d'une transmission d'un véhicule automobile (7) selon la revendication 6, **caractérisé en ce que** le levier de sélection (3) est conçu pour pouvoir pivoter ou tourner sur deux axes de rotation (5, 6), les axes de rotation (5, 6) s'étendant sensiblement perpendiculairement l'un à l'autre, de préférence se coupant sensiblement perpendiculairement.

8. Dispositif (1) de sélection de vitesses d'une transmission d'un véhicule automobile (7) selon la revendication 7, **caractérisé en ce que** chaque axe de rotation (5, 6) est associé à un seul actionneur (8, 9).

9. Dispositif (1) de sélection de vitesses d'une transmission d'un véhicule automobile (7) selon l'une des revendications précédentes, **caractérisé en ce que** le capteur est réalisé sous la forme d'un capteur tactile (32).

10. Procédé de sélection de vitesses d'une transmission d'un véhicule automobile (7) à l'aide d'un dispositif (1) selon l'une des revendications précédentes 1 à 9, **caractérisé en ce que** l'actionneur (8) déplace l'élément de commande (2) dans une position prédéterminée (15).

11. Procédé de sélection de vitesses d'une transmission d'un véhicule automobile (7) selon la revendication 10, **caractérisé en ce que** la position prédéterminée (15) correspond à une vitesse, notamment à une vitesse engagée automatiquement ou spécifiée.

12. Procédé de sélection de vitesses d'une transmission d'un véhicule automobile (7) selon l'une des revendications 10 ou 11, **caractérisé en ce que** différentes vitesses sont associées à différents seuils de commutation (26) de l'élément de commande (2) pour la commutation dans une autre vitesse et la commande (14) déclenche un changement de vitesse dès qu'un seuil de commutation (26) est franchi en direction de la position de commutation (27) qui lui est associée.

13. Procédé de sélection de vitesses d'une transmission d'un véhicule automobile (7) selon la revendication 12, **caractérisé en ce que**, lorsque l'élément de commande (2) est déplacé manuellement par un utilisateur (12), l'actionneur (8) génère une force de rappel variable (29) qui s'oppose, en tant que retour de force, à une force de réglage (30) injectée dans l'élément de commande (2) par l'utilisateur (12).

14. Procédé de sélection de vitesses d'une transmission d'un véhicule automobile (7) selon la revendication 13, **caractérisé en ce que** la force de rappel (29) est fonction de la position (15) de l'élément de commande (2).

15. Procédé de sélection de vitesses d'une transmission d'un véhicule automobile (7) selon l'une des revendications précédentes 12 à 14, **caractérisé en ce que** l'actionneur (8) fait vibrer l'élément de commande (2) sur au moins un axe de rotation (5, 6) en fonction de la position (15) de l'élément de commande (2).
